# EUROPEAN PATENT SPECIFICATION

(11) **EP 0 723 854 B1**
(45) Date of publication and mention of the grant of the patent: **20.10.1999**
(21) Application number: 96101206.9
(22) Date of filing: 29.01.1996
(51) Int. Cl.: B29C 65/16, G01N 33/52, G01N 31/22, C12Q 1/00

(54) **Apparatus for sealing dry chemical analysis film**
Gerät zum Versiegeln trockenen chemischen Analysenfilms
Appareil de scellement de films d'analyse chimique secs

(30) Priority: 30.01.1995 JP 1246595
(43) Date of publication of application: 31.07.1996
(73) Proprietor: Fuji Photo Film Co., Ltd., Kanagawa-ken (JP)
(72) Inventor: Terashima, Masaaki, c/o Fuji Photo Film Co., Ltd., Asaka-shi, Saitama-ken (JP); Fujisaki, Yasushi, c/o Fuji Photo Film Co., Ltd., Asaka-shi, Saitama-ken (JP); Seshimoto, Osamu, c/o Fuji Photo Film Co., Ltd., Asaka-shi, Saitama-ken (JP)
(74) Representative: Weisert, Annekäte, Dipl.-Ing. Dr.-Ing.

(56) References cited:
- EP-A- 0 621 478
- DE-A- 1 629 219
- US-A- 4 699 684

## Description

This invention relates to an apparatus for sealing a dry chemical analysis film which has a reagent layer whose optical density changes upon reaction with a specific biochemical component contained in a sample liquid and is used in biochemical analyses, and more particularly to an apparatus for heat-sealing a predetermined portion of such a chemical analysis film.

DE-A-1 629 219 discloses an apparatus for heat-welding together dry plastic films for making e.g. plastic bags and for sealing open plastic bags filled with a substance or the like. This known apparatus comprises heat-welding means which applies heat to predetermined areas of the films to be welded together for making e.g. a bag or other article and for closing the opening of bags or the like to thereby seal such bags or the like. Furthermore, such apparatus can have surrounding means which surrounds the predetermined area of the films to be welded together so that parts of the films which should remain unwelded are protected.

In the field of dry chemical analysis films which are used for quantitative or qualitative analysis of a specific component in a sample liquid in a common operation carried out in various industrial fields, especially, in quantitative analysis of a chemical component or a solid component contained in body fluid such as blood or urine which is very important in the field of clinical biochemistry.

There has been put into practice a "dry-to-the-touch" (to be expressed simply as "dry", hereinbelow) chemical analysis film with which a specific component contained in a sample liquid can be quantitatively analyzed through a droplet of the sample liquid spotted onto the film. See Japanese Patent Publication No. 53(1978)-21677 (United States Patent No. 3,992,158), Japanese Unexamined Patent Publication No. 55(1980)-164356(United States Patent No. 4,292,272) and the like. When such a chemical analysis film is used, the sample liquid can be analyzed more easily and more quickly than when a conventional wet analysis method is used, and accordingly the dry chemical analysis film is very convenient for medical facilities, laboratories and the like where lots of sample liquid have to be analyzed.

When a biochemical component or the like contained in a sample liquid is quantitatively analyzed using such a chemical analysis film, a droplet of the sample liquid is spotted onto the chemical analysis film and is held at a constant temperature for a predetermined time (incubation) in an incubator to cause coloring reaction. Then measuring light containing a wavelength which is pre-selected according to the combination of the component to be analyzed and the reagent contained in the reagent layer of the chemical analysis film is projected onto the chemical analysis film and the reflective optical density of the chemical analysis film is measured. The concentration in the sample liquid of the component to be analyzed is determined on the basis of the reflective optical density using a calibration curve or a standard curve which represents the relation between the concentration of the component and the reflective optical density.

The dry chemical analysis film comprises a support sheet such as of an organic polymer or plastic sheet and a reagent layer containing a reagent and a spreading layer which are formed on the support sheet. Conventionally the chemical analysis film is generally used in the form of a chemical analysis slide comprising a chip of the chemical analysis film held by a plastic frame. However use of such chemical analysis films with frame results in increase in the sizes of various parts handling the films such as cells in the incubator for incubating the films, the transfer system, a film supplier for storing the films in dry state, a chemical analysis film cartridge and the like. Thus the frame of the chemical analysis slide is obstructive to reducing the size of the biochemical analysis apparatus and at the same time reduces the film accommodating capacity of the incubator and the film supplier, which obstructs increase in the overall throughput capacity of the biochemical analysis apparatus. Further cost for mounting the frame is high and adds to cost of biochemical analysis.

In view of these circumstances, we have previously proposed a system of biochemical analysis in which a chip of chemical analysis film as it is or without frame is used. The chemical analysis film chip without frame will be referred to as "frameless chemical analysis film" in order to distinguish it from the chemical analysis slide, i.e., the chemical analysis film chip with frame, hereinbelow. For example, we have proposed, in Japanese Unexamined Patent Publication No. 5(1993)-188058, a cartridge for storing a plurality of frameless chemical analysis films and a technique for taking out the frameless chemical analysis film from the cartridge by use of a suction holding means such as a suction cup not to damage the film. Further we have proposed in Japanese Unexamined Patent Publication No. 5(1993)-209835 an incubator which can incubate the frameless chemical analysis films.

In an analysis apparatus using such a frameless chemical analysis film, there is a problem that a sample liquid spotted on a frameless chemical analysis film can spread over the spreading layer (or the reagent layer in the case of a film without spreading layer) beyond the edge of the film and can contaminate the incubator, the light measuring system, the film discharging mechanism, another frameless chemical analysis film spotted with a sample liquid, or the like. This problem is more serious in the case where the spreading layer of the film is of a porous material having fine porosities or where the sample liquid is low in viscosity.

Since the frameless chemical analysis film is transferred in sequence to the light measuring system, the film discharging mechanism and the like, the sample liquid spreading beyond the edge of the film can adhere to the light measuring system, the film discharging mechanism and the like to contaminate them in sequence. Especially when the sample liquid is a body fluid such as blood, contamination of such parts of the analysis apparatus with the sample liquid is undesirable from the viewpoint of sanitation.

Further there has been a problem in a frameless chemical analysis film having a spreading layer formed of a porous material such as fabric, unwoven fabric or filter paper that fraying is generated at the edge of the spreading layer and can adversely affect the result of measurement.

In order to overcome these problems, we have proposed a technique of preventing the sample liquid from spreading beyond the edge of the frameless chemical analysis film and preventing generation of fraying of the spreading layer by heat-sealing the peripheral edge portion of the frameless chemical analysis film to form a non-porous area there. (Japanese Patent Application No. 6(1994)-81326) (EP 0621 478A)

However this approach gives rise to a problem that gases such as CO gas and/or fine particles are generated when the film is fused during heat-sealing.

Part of such gases or fine particles is adsorbed on the film surface and greatly deteriorates the performance of frameless chemical analysis films for C-reactive protein (CRP), creatine phosphokinase (CPK), lactate dehydrogenase (LDH), total cholesterol (TCHO), glucose (GLU) and the like.

Accordingly it is necessary to rapidly remove the gasses or the fine particles from the vicinity of the film surface upon heat-sealing to prevent them from being adsorbed on the film surface.

When a part of a chemical analysis film web including a part to be heat-sealed is covered with a box-like cover extending in the transverse direction of the web and air in the cover is evacuated by a suction exhaust system disposed on one side of the web, the gasses or the fine particles generated during heat-sealing may be removed from the vicinity of the film surface. However this approach cannot surely prevent the gasses or the fine particles from contacting the film surface to deteriorate the performance of the chemical analysis film with respect to the analytes (substances to be analyzed) described above.

Further when the surface of a chemical analysis film is heat-sealed, flash light is sometimes generated due to heating or burning of the film surface, which can bring about chemical change of a substance contained in the reagent layer of the chemical analysis film and deteriorate the performance of the film.

In view of the foregoing observations and description, the primary object of the present invention is to provide an apparatus for sealing a dry chemical analysis film which is simple in structure and can heat-seal a predetermined portion of a chemical analysis film without fear of deterioration in the performance of the film due to gasses or fine particles generated during heat-sealing.

Another object of the present invention is to provide an apparatus for sealing a dry chemical analysis film which can prevent flash light generated during heat-sealing from affecting a substance contained in the reagent layer of the chemical analysis film and deteriorating the performance of the film.

In accordance with the present invention, there is provided an apparatus for sealing a dry chemical analysis film comprising:
a heat-sealing means which applies heat to a predetermined area of the chemical analysis film and heat-seals the surface of the chemical analysis film in the area,
a surrounding means which surrounds the predetermined area of the chemical analysis film to be heat-sealed,
a suction exhaust means which evacuates the inside of the surrounding means, thereby rapidly discharging outside the surrounding means a substance which is generated from the predetermined area of the chemical analysis film during said heat-sealing and can deteriorate the performance of the chemical analysis film;
and a mask means which is placed on the chemical analysis film to cover the chemical analysis film to prevent a substance which is generated from the predetermined area of the chemical analysis film during said heat-sealing and can deteriorate the performance of the chemical analysis film from reaching the chemical analysis film except the predetermined area which is exposed through a slit formed in the mask means.

Upon operation of the suction exhaust means, there is generated a flow of gas containing gasses or fine particles generated during heat-sealing. When the gas flow dwells above the film surface or flows on the film surface, the gasses or the fine particles are adsorbed on the film surface and deteriorate the performance of the film. The expression "rapidly discharging" means to discharge the substance in a short time or at a rate in or at which adsorption of the substance cannot occur. It is preferred that the flow of gas be directed upward.

The term "chemical analysis film" should be broadly interpreted to include those comprising a reagent layer and a spreading layer, those in which a layer doubles the reagent layer and the spreading layer, those having no spreading layer and those so-called a test piece comprising a support body in the form a thin stick and a reagent layer in the form of a small tip laminated on the support body. Further the chemical analysis film may be used either in the form of a chemical analysis slide described above or in the form of a frameless chemical analysis film. The term "chemical analysis element" is sometimes used as a general term for the chemical analysis slide and the frameless chemical analysis film.

The heat-sealing means may be in the form of a laser beam projecting head, a heating head heated by an electric heater, ultrasonic sealing head or the like. When a laser beam projecting head is employed as the heat-sealing means, the laser beam projecting head is brought close to a chemical analysis film web and a laser beam is projected onto the web in such a position that the sealed portion of the web forms the peripheral edge of each film chip when the web is cut into a plurality of film chips.

The slit in the mask member is preferably as small as possible in width so long as it permits heat-sealing.

In the present invention, the surrounding means surround the heat-sealing means and confines therein harmful substances such as gasses or fine particles which are generated during heat-sealing and can deteriorate the performance of the chemical analysis film and the suction exhaust means generates a gas flow and rapidly discharges the harmful substances together with the gas flow outside the surrounding means.

Accordingly the chemical analysis film is less exposed to such harmful substances, whereby deterioration of the performance of the chemical analysis film due to adsorption of the harmful substances can be prevented.

In the present invention, a mask means, for instance, a light-shielding mask means, is placed on the chemical analysis film to cover the chemical analysis film except the predetermined area to be heat-sealed, whereby the harmful substances is prevented from reaching the part of the chemical analysis film which contributes to the analysis. Further, the light-shielding mask means protects the part of the chemical analysis film which contributes to the analysis from flash light generated during heat-sealing, whereby chemical change of the reagent components or chemicals contained in the reagent layer can be prevented.

In the present invention, deterioration of the performance of the chemical analysis film can be more effectively prevented.

### BRIEF DESCRIPTION OF THE DRAWINGS

Figure 1 is a schematic perspective view showing a chemical analysis film sealing apparatus in accordance with an embodiment of the present invention,
Figure 2 is a plan view showing a chemical analysis film web heat-sealed by the chemical analysis film sealing apparatus shown in Figure 1,
Figure 3 is a plan view showing a chemical analysis film chip cut off from the chemical analysis film web shown in Figure 2,
Figure 4 is a graph proving the effect of the present invention and showing it in relation to the effects of comparative examples,
Figure 5 is a graph showing the measured values for the respective chemical analysis film chips obtained from the sealing apparatus of an embodiment of the present invention,
Figure 6 is a graph showing the measured values for the respective chemical analysis film chips obtained from a sealing apparatus of a first comparative example,
Figure 7 is a graph showing the measured values for the respective chemical analysis film chips obtained from a sealing apparatus of a second comparative example,
Figure 8 is a graph showing the measured values for the respective chemical analysis film chips obtained from the sealing apparatus of a third comparative example,
Figure 9 is a graph showing the measured values for the respective chemical analysis film chips obtained from the sealing apparatus of a fourth comparative example,
Figure 10 is a graph showing the measured values for the reference chemical analysis film chips,
Figure 11A is a view showing an example of a sealing pattern different from that shown in Figure 3, and
Figure 11B is a view showing another example of a sealing pattern different from that shown in Figure 3.

### DESCRIPTION OF THE PREFERRED EMBODIMENT

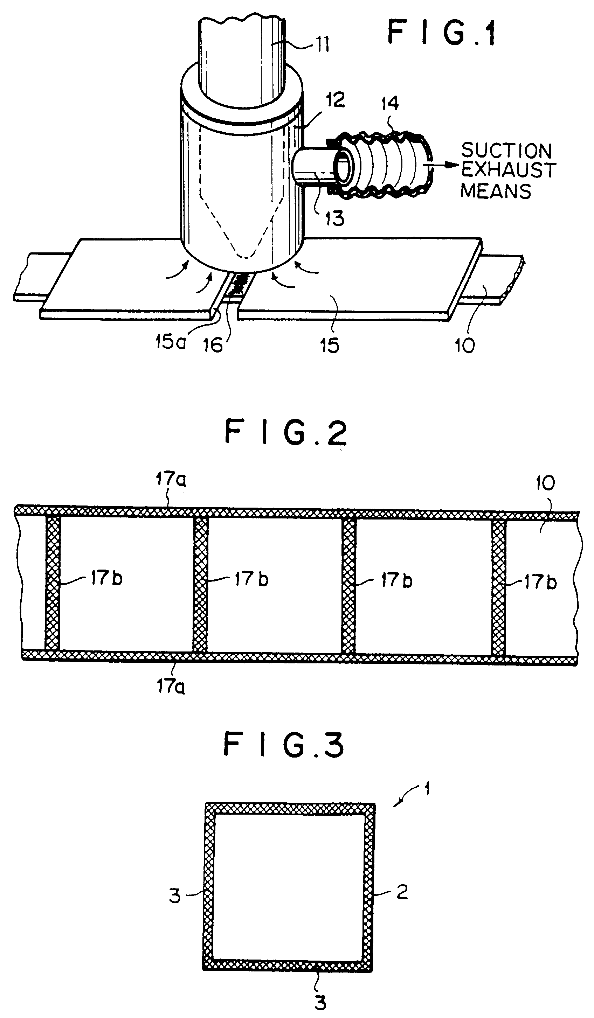

In Figure 1, a chemical analysis film sealing apparatus in accordance with an embodiment of the present invention comprises a laser torch 11 which moves in the longitudinal and transverse directions of a chemical analysis film web 10 in a continuous length and projects a laser beam onto a predetermined portion of the web 10 to heat-seal the portion, a cylindrical surrounding means 12 which surrounds the lower end portion of the laser torch 11, an exhaust passage portion 13 projecting from the side wall of the surrounding means 12, a suction means (not shown) which evacuates the inside of the surrounding means 12, a flexible duct 14 connecting the exhaust passage portion 13 and the suction means, and a light-shielding mask 15 which covers the chemical analysis film web 10 with the portion-to-be-heat-sealed 16 exposed to the laser beam through a slit 15a. The apparatus is further provided with a driving means which moves the light-shielding mask 15 and the laser torch 11 in synchronization with each other.

Though not shown, the laser torch 11 comprises a laser source and an optical system which converts a laser beam output from the laser source to a laser beam having a predetermined beam diameter and outputs it through the lower end thereof.

The light-shielding mask 15 is slightly spaced from the surface of the chemical analysis film web 10 not to scratch the surface of the web 10 when it moves relative to the web 10.

When heat-sealing the chemical analysis film web 10, the light-shielding mask 15 is moved in the transverse direction and the longitudinal direction of the web 10 so that a desired portion-to-be-heat-sealed 16 is exposed through the slit 15a. The laser torch 11 is moved by a predetermined amount in synchronization with the light-shielding mask 15. In this manner, the chemical analysis film web 10 is transversely heat-sealed at regular intervals corresponding to the width of each chemical analysis film chip as indicated at 17b. The heat-sealed portions 17b are recessed and a groove which is V-shaped in cross-section is formed in each heat-sealed portion 17b.

The opposite edges 17a of the web 10 may be heat-sealed by the same sealing apparatus though they are generally sealed by a different apparatus such as comprising a heated cutter blade before the transverse heat-sealing.

The chemical analysis film web 10 is cut into a plurality of chemical analysis film chips 1 (Figure 3) at the transverse heat-sealed portions 17b along the center line thereof by use of a laser beam, a cutter or the like. The obtained film chip 1 is sealed at all the edges 3 of the spreading layer 2 as shown in Figure 3.

The chemical analysis film web 10 is formed by coating a reagent layer on a light-transmissive support sheet of an organic polymer or a plastic such as polyethylene terephthalate or polystyrene and laminating a spreading layer 2 on the reagent layer. The chemical analysis film chip 1 cut off from the web 10 may be used as it is, i.e., as a frameless chemical analysis film described above, or may be provided with a frame and used in the form of a slide as described above.

The reagent layer comprises at least one layer composed of a porous layer or a hydrophilic polymer binder such as gelatin containing therein a detecting reagent component which selectively reacts with an analyte and a reagent component (chemical analysis reagent, immunoassay reagent or the like) which is necessary for coloring reaction.

The spreading layer 2 is formed of a material resistant to rubbing such as woven or knitted fabric (or cloth) of synthetic fiber such as polyester (e.g., polyethylene terephthalate) or of blend of natural fiber and synthetic fiber, or paper and functions as a protective layer. Further the spreading layer causes a sample liquid spotted thereon to uniformly spread over the reagent layer.

For example, the support sheet is 150 to 200µm in thickness, the reagent layer is 10 to 40µm in thickness and the spreading layer 2 is 200 to 250µm in thickness.

The support sheet, the reagent layer and the spreading layer 2 of an individual chemical analysis film chip 1 are equal to each other and, for instance, 12mm x 12mm.

When a laser beam is projected onto the spreading layer 2 of the chemical analysis film web 10, the portion exposed to the laser beam is heat-sealed and converted to a sealed region impermeable to liquid, whereby a sample liquid spotted onto the chemical analysis film chip 1 is prevented from reaching the edge of the film chip 1 and contaminating parts of the biochemical analysis apparatus.

When it is only required to heat-seal the spreading layer 2, the energy of the laser beam is adjusted so that the portion exposed to the laser beam is melted and converted to a sealed region impermeable to liquid after solidification. When it is required to cut the support sheet as well as to heat-seal the spreading layer 2, the energy of the laser beam is adjusted so that the portion exposed to the laser beam is melted and converted to a sealed region impermeable to liquid after solidification and the chemical analysis film web 10 including the support sheet is cut by the laser beam. For example when a CO₂ laser is employed as the laser source, the output energy of the laser may be in the range of about 10W to about 25W and the heat sealing rate may be in the range of about 8m/min to about 10m/min when it is only required to heat-seal the spreading layer 2. When it is required to cut the support sheet as well as to heat-seal the spreading layer 2, the output energy of the laser may be in the range of about 10W to about 150W and the heat sealing rate may be in the range of about 1m/min to about 20m/min.

Since the chemical analysis film web 10 is formed of the materials described above, harmful substances, e.g., gasses such as CO or various fine particles are generated upon exposure to the laser beam and when such harmful substances adheres to or are adsorbed by the surface of the web 10, the performance of the film is deteriorated. Especially the performance of frameless chemical analysis films for C-reactive protein (CRP), creatine phosphokinase (CPK), lactate dehydrogenase (LDH), total cholesterol (TCHO), glucose (GLU) and the like is greatly deteriorated. Accordingly, in the apparatus of this embodiment, the inside of the surrounding means 12 is evacuated by the suction means simultaneously with heat-sealing.

The lower surface of the surrounding means 12 is open and when the gas inside the surrounding means 12 is sucked by the suction means, gas outside the surrounding means 12 flows into the surrounding means 12 through the opening and the harmful substances generated from the portion 16 of the web 10 is sucked into the surrounding means 12 together with the gas flowing into the surrounding means 12. The harmful substances sucked into the surrounding means 12 are sucked upward through the space between the outer surface of the lower end portion of the laser torch 11 and the inner surface of the surrounding means 12 and toward the suction means through the exhaust passage portion 13 and the duct 14 while part of the harmful substances is removed by a filter and the like.

The inside of the laser torch 11 is kept at a high pressure so that the harmful substances sucked into the surrounding means 12 cannot enter the laser torch 11, whereby the optical system inside the laser torch 11 is prevented from being contaminated with the harmful substances.

As described, in the sealing apparatus of this embodiment, the surface of the chemical analysis film web 10 is covered with the light-shielding mask 15 except the portion-to-be-heat-sealed 16.

The light-shielding mask 15 prevents the harmful substances from reaching the surface of the web 10 and surely prevents contamination of the web 10 with the harmful substances together with the suction means.

The light-shielding mask 15 is opaque and is formed of colored material such as polyvinyl chloride, polyethylene terephthalate, (meta-) acrylic polymer or the like. The light-shielding mask 15 shields the chemical analysis film from flash light generated during heat-sealing due to heating or burning of the film surface, thereby preventing deterioration of the performance of the film. Thus the light-shielding mask 15 prevents chemical change of a substance contained in the reagent layer of the chemical analysis film due to flash light which can result in deterioration of the performance of the film.

Though depending upon the outer diameter of the laser torch 11, it is preferred that the inner diameter of the surrounding means 12 be not greatly larger than the width of the chemical analysis film web 10. The gas sucking rate of the suction means should be determined depending on the inner diameter and/or the volume of the surrounding means 12 so that the harmful substances generated in the portion 16 of the web 10 is drawn upward and discharged outside through the exhaust passage portion 13 without flowing into between the light-shielding mask 15 and the web 10.

The duct 14 is in the form of flexible bellows not to interfere with movement of the laser torch 11 when it moves about the web 10.

The effect of preventing deterioration of the film performance of the apparatus of this embodiment will be described in comparison with first and second comparative examples obtained by modifications of the apparatus of this embodiment and third and fourth further comparative examples.

A web 10 of chemical analysis film for CRP (C-reactive protein) was heat-sealed by each of the sealing apparatus of this embodiment, first and second modifications of the apparatus of this embodiment and first and second comparative examples and fifty pieces of chemical analysis film chips 1 were cut from the web 10 heat-sealed by each sealing apparatus. The chemical analysis film chips 1 thus obtained were spotted with the same amounts of sample liquids containing therein the same amounts of CRP and the CRP contents of the sample liquids were measured by a biochemical analysis apparatus in which the CRP content was evaluated on the basis of the optical density of the reagent layer.

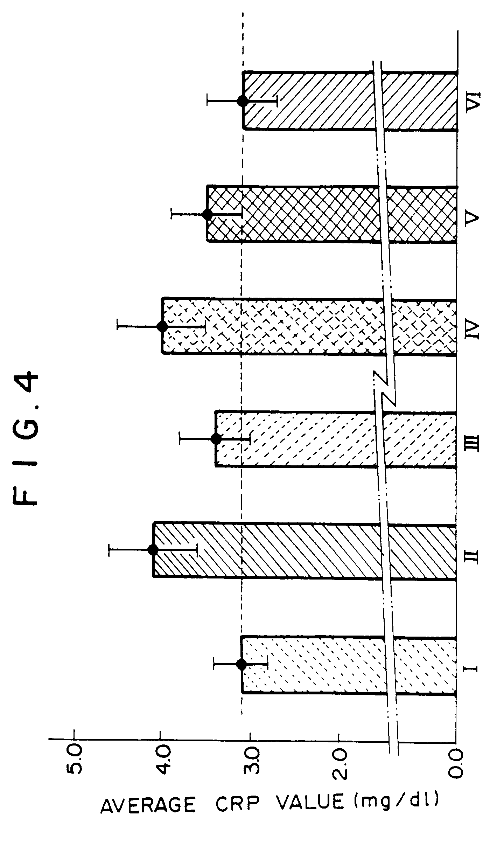

Bar I in Figure 4 shows the result of measurement for the chemical analysis film chips obtained from the sealing apparatus of this embodiment, where the harmful substances were sucked upward (upward suction) and the web 10 was covered with the light-shielding mask 15 as shown in Figure 1 (masking). Bar II in Figure 4 shows the result of measurement for the chemical analysis film chips obtained from a first comparative example of a sealing apparatus according to the embodiment described above, however where only masking was effected without upward suction. Bar III in Figure 4 shows the result of measurement for the chemical analysis film chips obtained from a second comparative sealing apparatus according to the embodiment described above, however where only upward suction was effected without masking.

Bar IV in Figure 4 shows the result of measurement for the chemical analysis film chips obtained from the sealing apparatus of a third comparative example, where neither upward suction nor masking was effected. Bar V in Figure 4 shows the result of measurement for the chemical analysis film chips obtained from the sealing apparatus of a fourth comparative example, where the surrounding means was in the form of an open box extending in the transverse direction of the chemical analysis film web 10 and an exhaust port was provided in one end face of the surrounding means to suck gas inside the surrounding means in the transverse direction of the web 10 (lateral suction). In the fourth comparative example, the harmful substances was considered to flow along the surface of the web 10 toward the exhaust port.

Bar VI in Figure 4 shows the result of measurement for the reference chemical analysis film chips which were not heat-sealed and accordingly were not exposed to harmful substances generated during heat-sealing. Accordingly, it can be considered that the smaller the deviation of the result of measurement for the chemical analysis film chips of each group from that for the reference chemical analysis film chips is, the less the performance of the film chips of the group is deteriorated.

The I-shaped mark on each bar indicates the range of fluctuation.

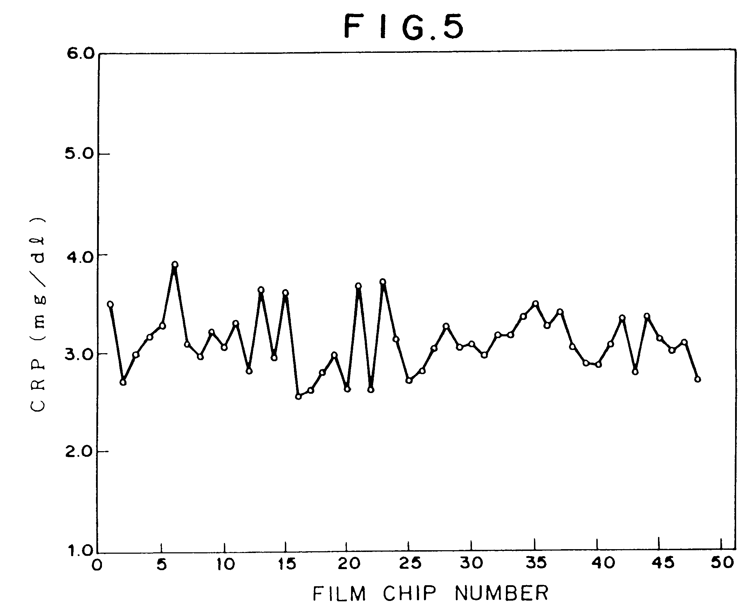

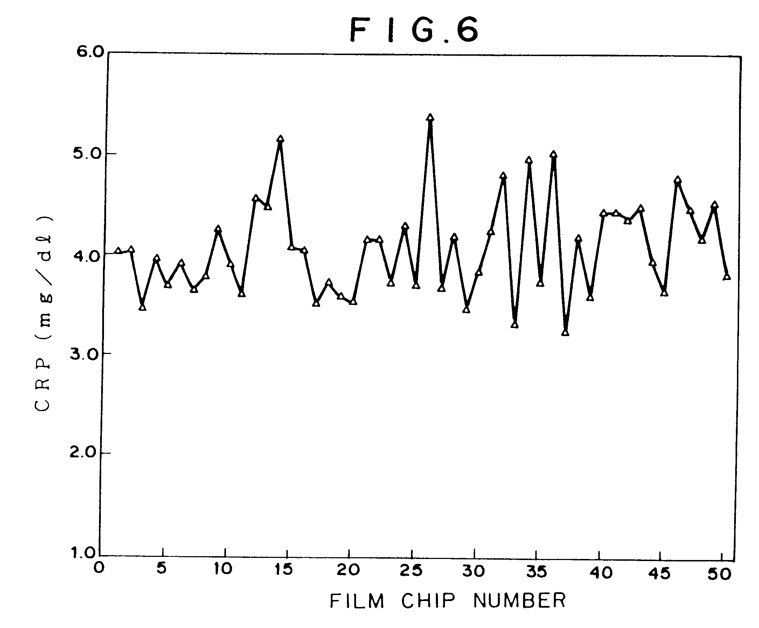

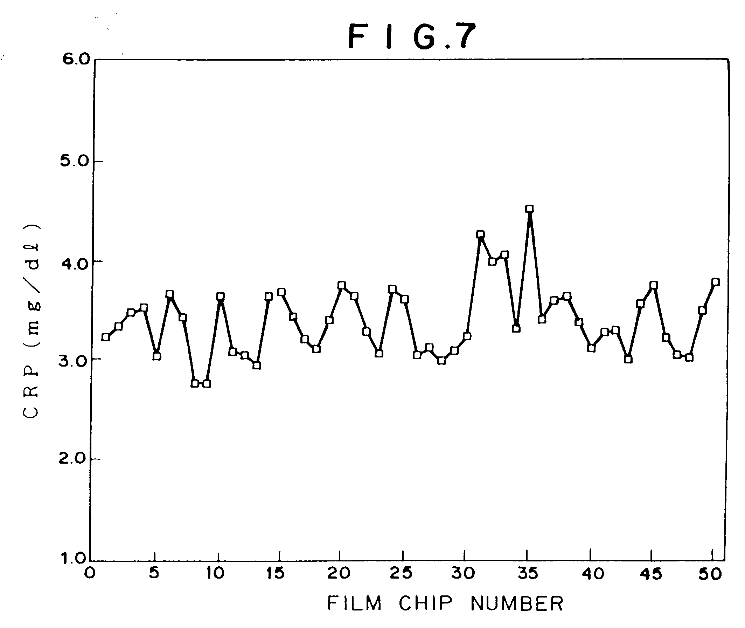

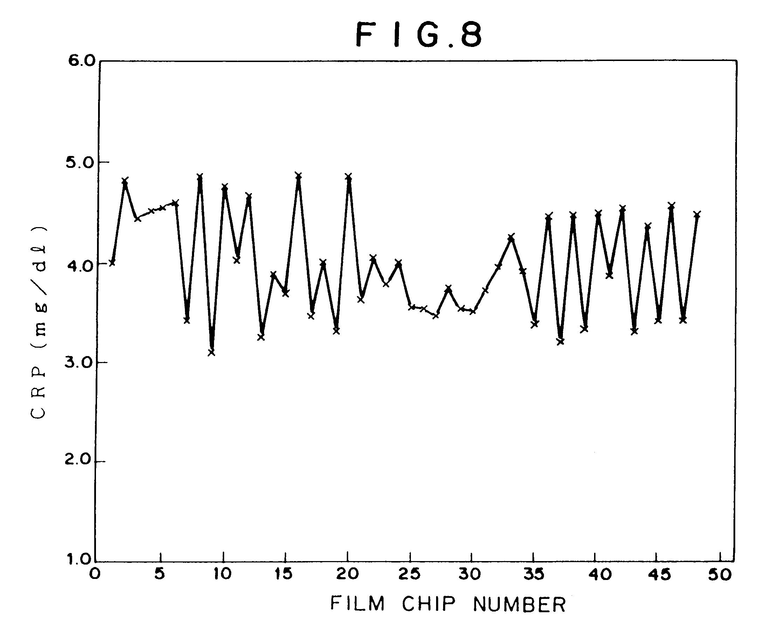

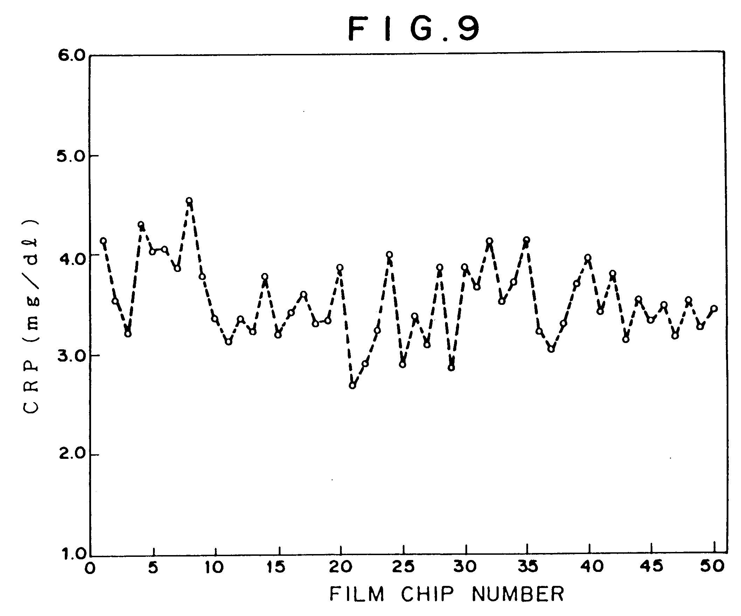

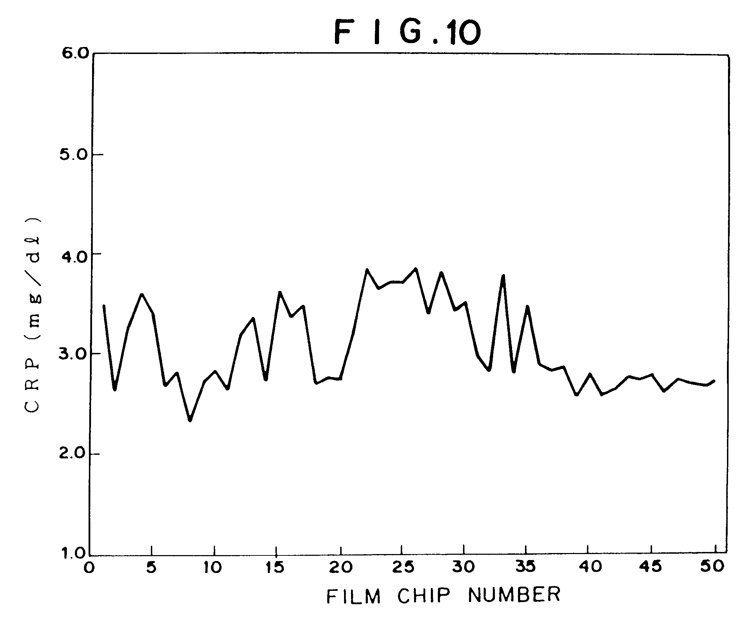

Figure 5 corresponds to bar I in Figure 4 and indicates the measured values for the respective chemical analysis film chips obtained from the sealing apparatus of the embodiment described above, and similarly Figures 6 to 10 respectively correspond to bar II to bar VI in Figure 4. In Figures 5 to 10, the film chip number corresponds to the order of the chip on the web 10.

Figures 4 to 10 show the following:
That is, when upward suction and masking are both effected, deterioration in the performance of the film can be substantially completely prevented as can be understood from the comparison of bar I and bar VI.
When upward suction is not effected, the performance of the film is greatly deteriorated and fluctuation in measured values increases.
Further when upward suction is effected, the frequency of repetition of increase and decrease of the measured values becomes less. In the fourth comparative example where lateral suction is effected, repetition of increase and decrease of the measured values is relatively frequent.
When masking is not effected, the performance of the film somewhat deteriorates even if upward suction is effected.
When masking was only effected without effecting upward suction, deterioration of the performance of the film was somewhat suppressed in the chemical analysis films for analytes other than CRP though the effect of masking was not so clear in the chemical analysis films for CRP.

The sealing apparatus of the present invention need not be limited to the embodiment described above but the embodiment may be variously modified within the scope of the invention. For example, the heat-sealing means need not be limited to the laser beam projecting means employed in the embodiment described above but other heat-sealing means such as a heating head, an ultrasonic wave projecting means or the like may be employed.

The surrounding means need not be cylindrical in shape but may be of various shapes so long as harmful substances generated during heat-sealing can be sucked upward. For example, the surrounding means may be a rectangular tube having rounded corners or may be like a funnel with a larger end directed toward the film.

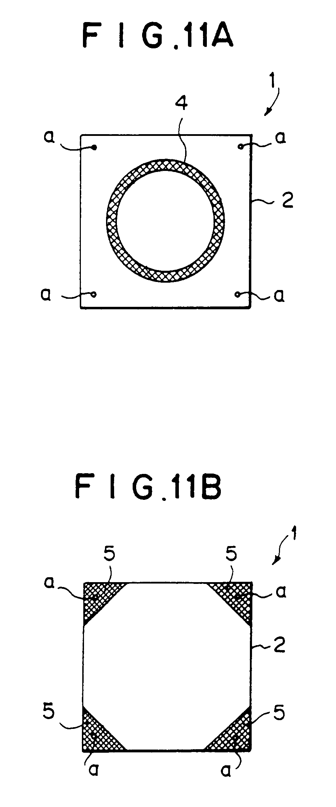

Further the sealing pattern of the film chip need not be limited to that shown in Figure 3 but may be of various shapes so long as it can prevent the sample liquid spotted onto the film 1 from spreading beyond the edge. For example, the sealing pattern may be as shown in Figure 11A or 11B. That is, in the sealing pattern shown in Figure 11A, an annular heat-sealed portion 4 is formed inside the portions indicated at a where a jig for holding the film web is brought into contact with the film web. The annular heat-sealed portion 4 is formed by annularly heating and melting the spreading layer and then solidifying the molten portion to form a substantially non-porous region by standing still at a room temperature or blowing cool air on the molten portion. In the sealing pattern shown in Figure 11B, a triangular heat-sealed portion 5 is formed at each corner including the portion indicated at a where a jig for holding the film web is brought into contact with the film web. The heat-sealed portion 5 is formed by heating and melting the corner of the spreading layer and then solidifying the molten portion to form a substantially non-porous region by standing still at a room temperature or blowing cool air on the molten portion.

When the heat-sealing means is a laser beam projecting means, it is preferred that the laser beam be projected as normal to the film surface as possible.

## Claims

1. An apparatus for sealing a dry chemical analysis film (10) comprising
a heat-sealing means (11) which applies heat to a predetermined area (16) of the chemical analysis film (10) and heat-seals the surface of the chemical analysis film (10) in the area (16),
a surrounding means (12) which surrounds the predermined area (16) of the chemical analysis film (10) to be heat-sealed,
a suction exhaust means (13, 14) which evacuates the inside of the surrounding means (12), thereby rapidly discharging outside the surrounding means (12) a substance which is generated from the predetermined area (16) of the chemical analysis film (10) during said heat-sealing and can deteriorate the performance of the chemical analysis film (10),
and a mask means (15) placed on the chemical analysis film (10) to cover the chemical analysis film (10) to prevent a substance which is generated from the predetermined area (16) of the chemical analysis film (10) during said heat-sealing and can deteriorate the performance of the chemical analysis film (10) from reaching the chemical analysis film (10) except the predetermined area (16) which is exposed through a slit (15a) formed in the mask means (15).

2. The apparatus according to claim 1, characterized in that said heat sealing means (11) comprises a laser beam projecting head.

3. The apparatus according to claim 2, characterized by driving means adapted to move the mask means (15), preferably a light shielding mask, and the laser beam projecting head, preferably a laser torch, in synchronization with each other.

## Patentansprüche

1. Einrichtung zum Versiegeln eines trockenchemischen Analysefilms (10), umfassend
ein Heißsiegelmittel (11), welches Wärme auf einen vorbestimmten Bereich (16) des chemischen Analysefilms (10) anwendet und die Oberfläche des chemischen Analysefilms (10) in dem Bereich (16) heißsiegelt,
ein Ummantelungs- bzw. Umschließungsmittel (12), welches den vorbestimmten Bereich (16) des chemischen Analysefilms (10), der heißgesiegelt werden soll, umgibt bzw. umringt bzw. umschließt,
ein Saugauslaßmittel (13, 14), welches das Innere des Ummantelungs- bzw. Umschließungsmittels (12) evakuiert, dadurch schnell nach außerhalb des Ummantelungs- bzw. Umschließungsmittels (12) eine Substanz entlädt, welche von dem vorbestimmten Bereich (16) des chemischen Analysefilms (10) während der Heißsiegelung erzeugt wird und die Leistungsfähigkeit bzw. den Nutzeffekt bzw. die Wirkungsweise des chemischen Analysefilms (10) verschlechtern kann,
und ein Maskenmittel (15), das auf dem chemischen Analysefilm (10) zum Abdecken des chemischen Analysefilms (10) plaziert ist, um zu verhindern, daß eine Substanz, welche von dem vorbestimmten Bereich (16) des chemischen Analysefilms (10) während des Heißsiegelns erzeugt wird und die Leistungsfähigkeit des chemischen Analysefilms (10) verschlechtern kann, den chemischen Analysefilm (10) mit Ausnahme des vorbestimmten Bereichs (16), welcher durch einen in dem Maskenmittel (15) ausgebildeten Schlitz (15a) freigelegt ist, erreicht.

2. Einrichtung gemäß Anspruch 1, dadurch **gekennzeichnet,** daß das Heißsiegelmittel (11) einen Laserstrahlprojektionskopf umfaßt.

3. Einrichtung gemäß Anspruch 2, **gekennzeichnet** durch ein Antriebsmittel, das dazu geeignet ist, das Maskenmittel (15), vorzugsweise eine Lichtabschirmungsmaske, und den Laserstrahlprojektionskopf, vorzugsweise einen Laserbrenner- bzw. -schweißbrenner, in Synchronisation miteinander zu bewegen.

## Revendications

1. Appareil pour sceller un film sec pour analyse chimique (10), comprenant :
un moyen de thermosoudage (11) qui applique de la chaleur sur une surface prédéterminée (16) du film (10) pour analyse chimique et thermosoude la surface du film (10) pour analyse chimique dans la surface (16),
un moyen formant une enceinte (12) qui entoure la surface prédéterminée (16) du film (10) pour analyse chimique à thermosouder,
un moyen d'extraction par aspiration (13, 14) qui fait le vide à l'intérieur du moyen formant une enceinte (12), de façon à décharger rapidement à l'extérieur du moyen formant une enceinte (12) une substance qui est générée à partir de la surface prédéterminée (16) du film (10) pour analyse chimique pendant ce thermosoudage et qui peut détériorer la performance du film (10) pour analyse chimique, et
un moyen de masquage (15) qui est placé sur le film (10) pour analyse chimique de façon à recouvrir le film (10) pour analyse chimique et à empêcher une substance, qui est générée à partir de la surface prédéterminée (16) du film (10) pour analyse chimique pendant ce thermosoudage et qui peut détériorer la performance du film (10) pour analyse chimique, d'atteindre le film (10) pour analyse chimique à l'exception de la surface prédéterminée (16) qui est exposée à travers une fente (15a) formée dans le moyen de masquage (15).

2. Appareil suivant la revendication 1, caractérisé en ce que ledit moyen de thermosoudage (11) comprend une tête de projection de faisceau laser.

3. Appareil suivant la revendication 2, caractérisé par un moyen d'entraînement adapté pour déplacer le moyen de masquage (15), de préférence un masque formant un écran contre la lumière, et la tête de projection de faisceau laser de préférence une torche laser, en synchronisation l'un avec l'autre.
